# EUROPEAN PATENT SPECIFICATION

(11) **EP 4 253 770 B1**
(45) Date of publication and mention of the grant of the patent: **01.07.2026**
(21) Application number: 23164278.6
(22) Date of filing: 27.03.2023
(51) Int. Cl.: F16B 5/06, B60R 13/02, F16B 21/07

(54) **FASTENER CLIP**
BEFESTIGUNGSKLAMMER
ATTACHE DE FIXATION

(30) Priority: 29.03.2022 US 202263324637 P; 02.03.2023 US 202318116304
(43) Date of publication of application: 04.10.2023
(73) Proprietor: Termax Company, Lake Zurich, IL 60047 (US)
(72) Inventor: Dickinson, Daniel James, Lincolnshire, Illinois, 60069 (US); Friesorger, David, McHenry, Illinois, 60050 (US)
(74) Representative: Weinstein Services & Conseils

(56) References cited:
- US-A- 4 865 505
- US-A1- 2020 339 045

## Description

### Continuity and Background

This application claims priority to provisional patent application 63/324,637 and a filing date of March 29, 2022, that claims priority to patent application 16/925,246 with a filing date of July 9, 2020, and a patent issue date of September 13, 2022 and patent number 11,440,487 and a docket number of P063.

The invention relates generally to devices for fastening objects, and more particularly to a fastener clip assembly for insertion into an engagement structure, such as a vehicle chassis, a hollow substrate, a wall, a plate, or any suitable surface.

A number of devices and fasteners are currently available for fastening panels, such as body panels and automobile interior trim piece panels, to the chassis of a vehicle. As used herein, a body panel refers to, for example, any interior or exterior body panel on a vehicle, a plastic interior trim piece, door panel, headliner or any interior trim piece. Additionally, the panel may be any suitable exterior body panel, such as a fender, bumper, quarter panel or door panel. The chassis of the vehicle may include any substrate, plate, body panel, structural framework, chassis component or subcomponent, wall or any suitable object.

These conventional fastener devices provide approximately relatively equal levels of insertion and extraction force. These body panels often attach to the chassis of an automobile with a relatively high level of insertion force while providing a relatively low level of extraction force.

Fastener clips, such as two-piece fasteners (multi-piece), are known for attaching body panels to an automobile chassis. Two-piece fasteners are used so that if the panels are removed after original installation, such as to service the components in the door, they may be pulled apart so that one portion remains attached to the sheet metal while the other remains attached to the trim panel. The two pieces may also be reattached after separation. However, two-piece fasteners require manufacturing of multiple pieces and labor-intensive assembly of the two pieces and thus are relatively expensive.

One-piece fasteners are typically less expensive than two or multi piece fasteners. One-piece fasteners have a base to attach to a body panel and a blade attached to the base and wings attached at least to the top of the blade at a tip of the fastener for fastening to a frame slot. However, if the frame slot and the fastener are misaligned then the forces on the wings are unequal since the wing closest to the slot edge will experience higher wing compression while the other wing will have insufficient springing force to engage the slot. As the clip is forced into the slot, such high forces on one wing may cause the wing to break off thus rendering the fastener incapable of fastening the body panel to the frame. Worse, the broken, damaged or weakened wing can cause detachment of the body panel or contribute to rattles.

The wings of conventional fasteners have a sharp, unsmooth groove to engage the edge of the frame slot. When the clip is removed however, the sharp edges of the frame slot cut into the softer plastic and cut the groove. During manufacture, the slots are typically formed in the frame of the vehicle, such as in an inner roof or door sheet metal structure, by punching the sheet metal. As the punch enters the sheet metal, the outer part of the sheet metal is pushed toward the inside and a metal puncture or ridge is formed on the inside of the sheet metal. The resulting slot edge on the outer part of the slot is relatively smooth; however, the inner part of the slot edge is sharp and rough. Upon removal of the fastener clip, the sharp edges of the frame cut off the groove so that the clip may not be reinserted and reusable.

If the slot is off-center or if the sheet metal varies in thickness or if tolerances in production of the slot in the vehicle chassis or in the trim-piece exist, for example, then engagement of one portion of the slot in the chassis with one of the wings may not provide suitable frictional engagement. Twisting of the body panel will be likely more prevalent because less than all contact points are actually made with the slot of the vehicle chassis. As a result, conventional single piece fasteners do not self-align themselves when the fastener and the body panel are misaligned and are prone to wing breakage such that the fastener cannot be re-attached.

Conventional fasteners typically do not adequately secure the panel to the vehicle chassis having variations in slot size and location or sheet metal with different curvature or thicknesses throughout. Conventional single piece fasteners do not self-align themselves when the fastener and the body panel are misaligned and are prone to wing breakage such that the fastener cannot be re-attached. Also, conventional fasteners are not suitable when subjected to a variety of environmental conditions, such as in the presence of vibration at various levels of amplitude and frequency. For example, conventional fasteners of this type typically do not prevent or minimize the amount of buzzing, rattling or any other type of noise that may cause attention to the occupants of the vehicle or otherwise weaken the attachment. Conventional fasteners do not adequately accommodate various levels of production tolerances, such as various dimensions amongst, for example, the body panels as well as the vehicle chassis. Thus, conventional fastener devices typically do not self-align nor adequately fasten to a range of sheet metal thicknesses and do not minimize or eliminate buzzing and rattling and do not sufficiently accommodate variations in production tolerances. As a result, wear, squeaks, rattles, buzzing, corrosion and loss of elasticity and loss of sealing may result, especially after years of vehicle operation and exposure to vibration, heat, humidity, and other environmental conditions.

US 4 865 505 A discloses a clip member.

The invention is set out in the appended set of claims.

### Brief Description of the Drawings

Other objects and advantages of the invention may become apparent upon reading the detailed description and upon reference to the accompanying drawings.
Figure 1 is a perspective view of a fastener clip assembly, in accordance with some embodiments.
Figure 2 is a perspective view of two pieces of a fastener clip, in accordance with some embodiments.
Figure 3 is another perspective view of two pieces of a fastener clip, in accordance with some embodiments.
Figure 4 is yet another perspective view of two pieces of a fastener clip, in accordance with some embodiments.
Figure 5 is yet another perspective view of two pieces of a fastener clip, in accordance with some embodiments.
Figure 6 is a perspective view of a blade configured to receive a fastener clip, in accordance with some embodiments.
Figure 7 is a perspective view of a fastener clip attached to a chassis, in accordance with some embodiments.
Figure 8 is an exploded view of a fastener clip, a tub, a body panel, a blade and a chassis, in accordance with some embodiments.
Figure 9 is a perspective view of a fastener clip, a tub, a body panel, a blade attached to a chassis, in accordance with some embodiments.
Figure 10 is a front view of a fastener clip, a tub, a body panel, a blade attached to a chassis, in accordance with some embodiments.
Figure 11 is a perspective view of a fastener clip, a tub attached to a blade, in accordance with some embodiments.
Figure 12 is a top view of a fastener clip, a tub attached to a blade, in accordance with some embodiments.
Figure 13 is a top view of a fastener clip, a tub attached to a blade, in accordance with another embodiment.
Figure 14 is a perspective view of a fastener clip, a tub attached to a blade, in accordance with another embodiment.
Figure 15 is a front view of a fastener clip, a tub, a body panel, a blade attached to a chassis, in accordance with another embodiment.
Figure 16 is a perspective view of a fastener clip, a tub, a body panel, a blade attached to a chassis, in accordance with another embodiment.
Figures 17 through 28 are different embodiments of the fastener clip.
The embodiments of Figures 1 to 7 are not covered by the claims.

While the invention is subject to various modifications and alternative forms, specific embodiments thereof are shown by way of example in the drawings and the accompanying detailed description. It should be understood, however, that the drawings and detailed description are not intended to limit the invention to the particular embodiments. This disclosure is instead intended to cover all modifications, equivalents, and alternatives falling within the scope of the present invention as defined by the appended claims.

### Detailed Description

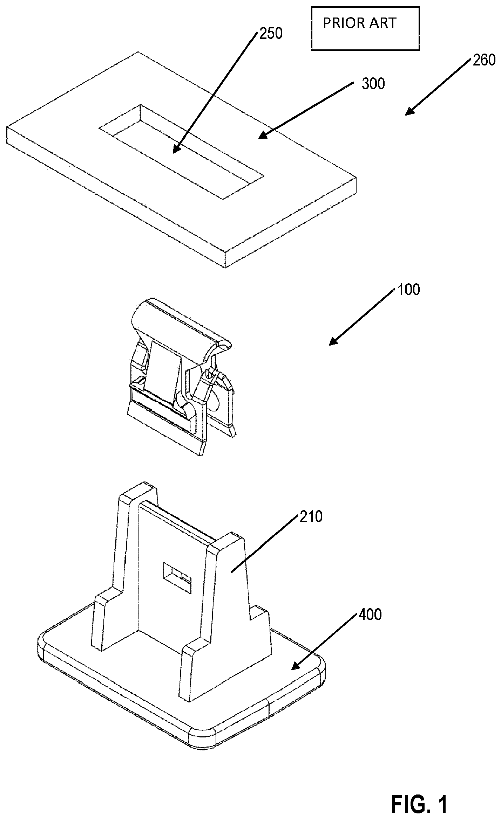

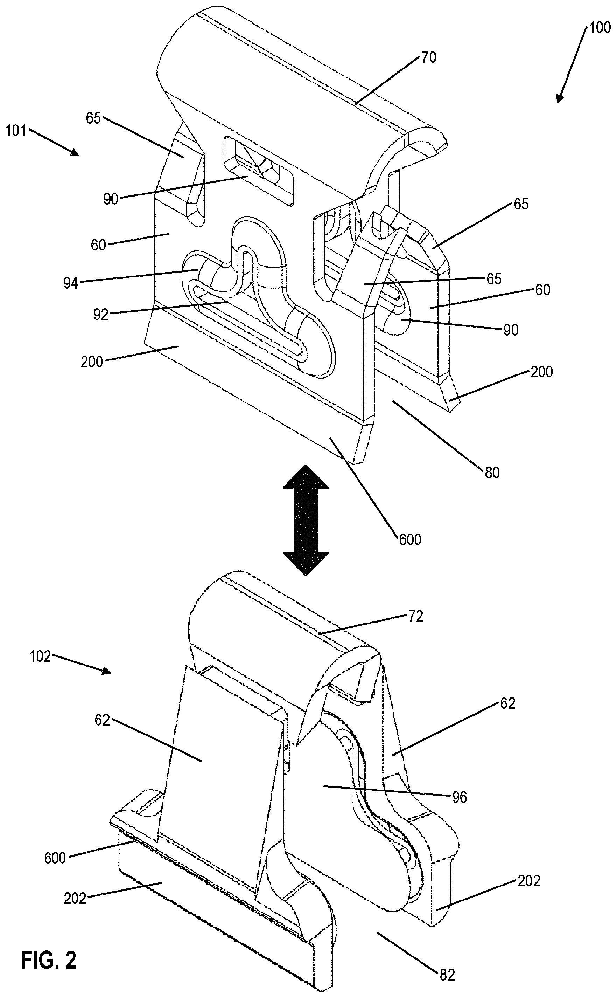

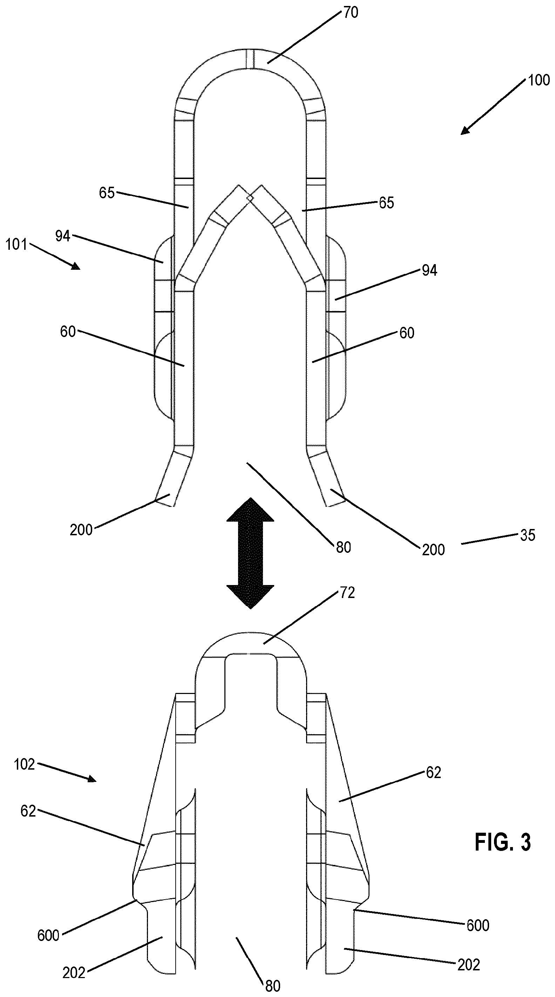

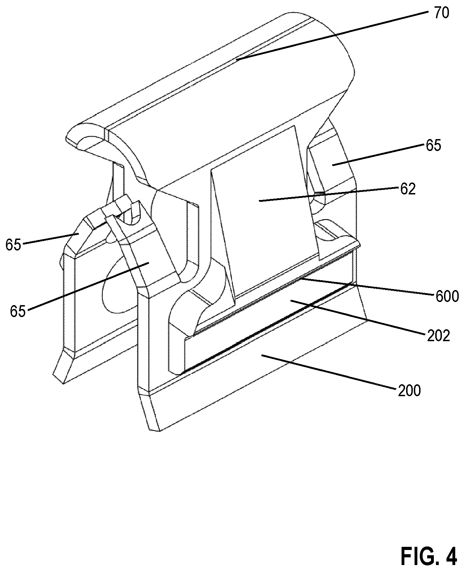

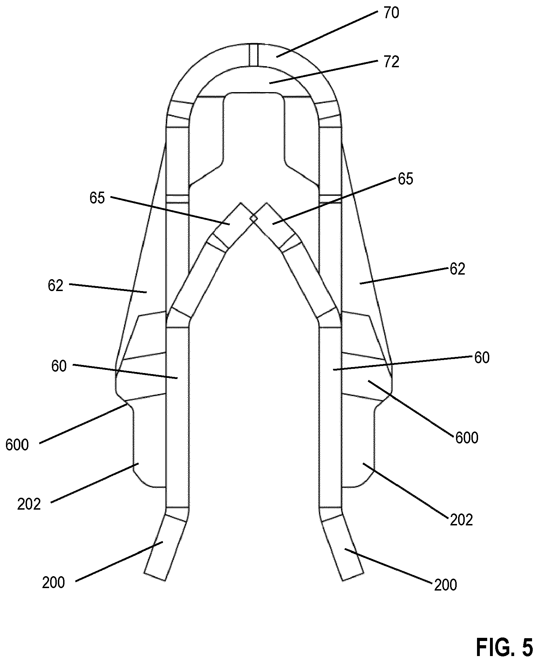

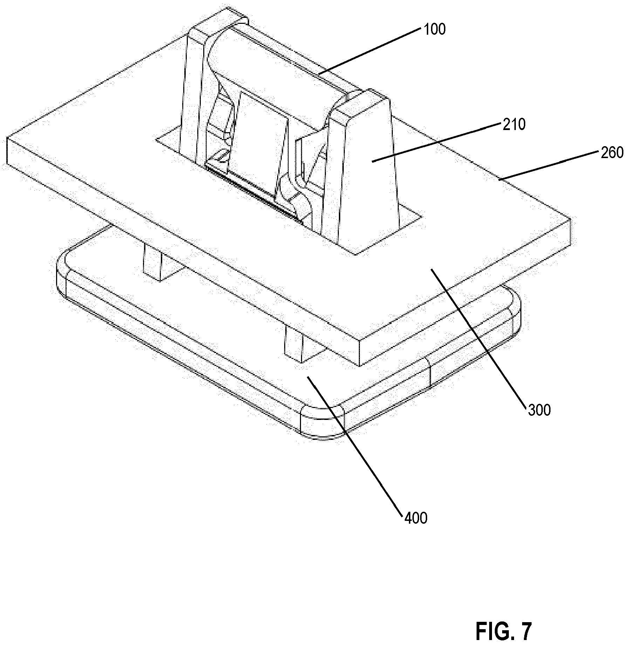

Figures 1 through 7 show a two-piece fastener 100, comprising a first piece 101, and a second piece 102 and is described in parent application serial number 16/925,246 and a filing date of July 9, 2020, and a docket number of P063.

Figure 1 is a perspective view of a fastener clip assembly, in accordance with some embodiments.

Fastener clip "tub" 110 is configured to fasten a body panel 410 to a chassis 260.

In this manner the fastener clip 110 can mate together the bottom surface 300 of chassis 260 with the top surface 400 of body panel 410. Blade (also referred to as a rib) 220, which extends from the top surface 400 of body panel 410, is configured to receive and be secured to the opening 80 of the fastener clip 110. In some embodiments, blade/rib 220 may be integrated, attached from the bottom and through a hole of body panel 410, hinged, unified or separately molded onto body panel 410. In other embodiments, blade/rib 220 may be attached to surface 400 using various other means with fasteners such as screws, pins, clips, glue or any suitable fasteners. In one embodiment, body panel 410 may extend and touch the chassis 260 in order to firmly and securely engage the body panel 410 in an aesthetically appealing manner. Thus, typical applications include A/B/C pillar body panels 410 such that the body panel 410 may be sufficiently curved to engage and cover the chassis 260 as shown in US 2011/0119875 incorporated by reference. Extending the body panel 410 may be referred to as a zero gap since the body panel 410 covers or even engages or touches the chassis 260.

In some embodiments, fastener clip 110 may be configured to be inserted through slot 250 of top surface 300 and to secure itself to the fastener clip 110. In some embodiments, the fastener clip 110 is configured to fasten together chassis 260 and body panel 410 based at least upon the fastener clip 110 being secured through slot 250 of chassis 260 and to blade/rib 220 of body panel 410.

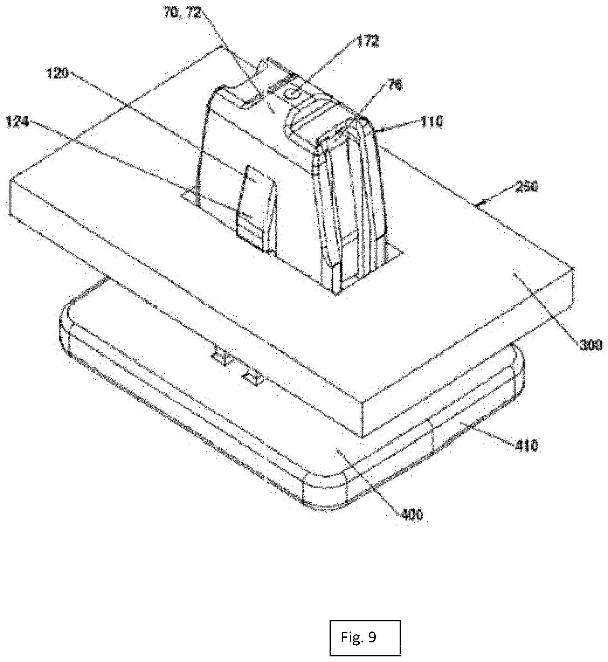

Figure 9 is a perspective view of a fastener clip 110, a body panel 410, a blade/rib 220 attached to a chassis 260, in accordance with some embodiments. In some embodiments, surface 400 of a body panel 410 and surface 300 may be part of the chassis 260 /frame of an automobile. Accordingly, the fastener clip 110 may be configured to fasten together a body panel 410 to the chassis/frame 260 of an automobile. The distance between an extended part of the body panel 410 and an extended part of chassis/frame 260 may be any desired distance such as a negative distance such that the body panel 410 goes into chassis/frame 260 or a zero gap as previously described such that the surfaces touch or engage each other or may be floating such that the body panel 410 and chassis/frame 260 are not connected by are substantially close enough to meet the desire aesthetics and avoid rattling.

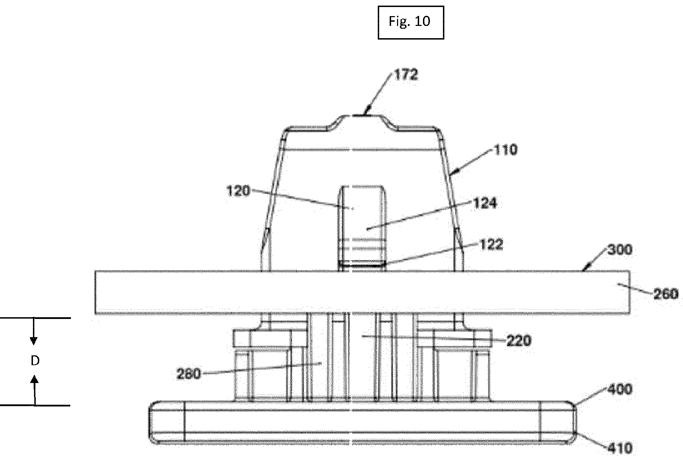

Figure 10 is a front view of a fastener clip 110, a body panel 410, a blade/rib 220 attached to a chassis 260, in accordance with some embodiments. Alternatively, the gap may be set as a design parameter such as to allow a predetermined distance D (Fig. 10) between the body panel 410 and chassis/frame 260.

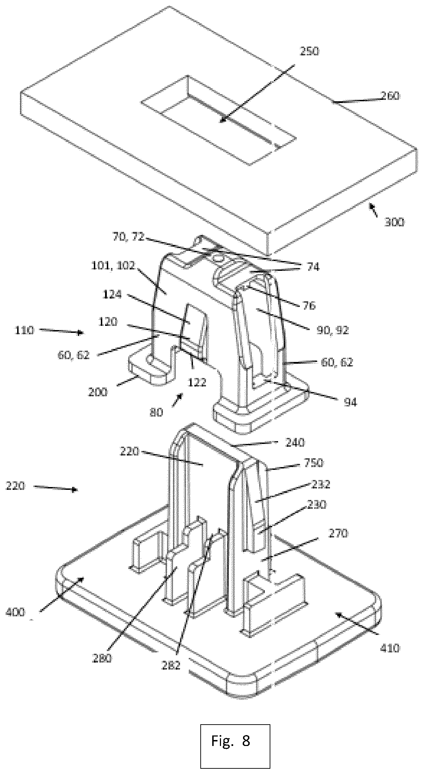

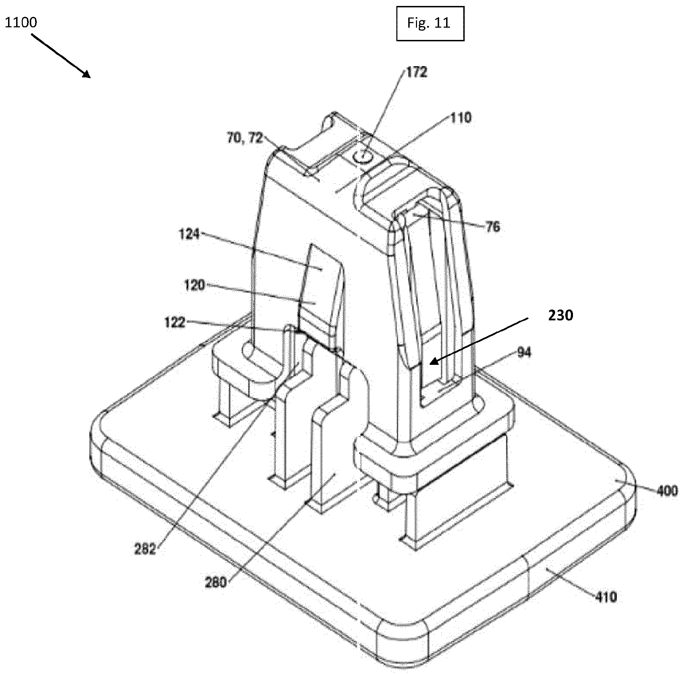

Figure 11 is a perspective view of a fastener clip 110, a body panel 410 attached to a blade/rib 220, in accordance with some embodiments. For example, the stand offs 280 and a notch 282 as shown in Fig. 8 provide a seat for the tub 110 and to provide the desired predetermined distance.

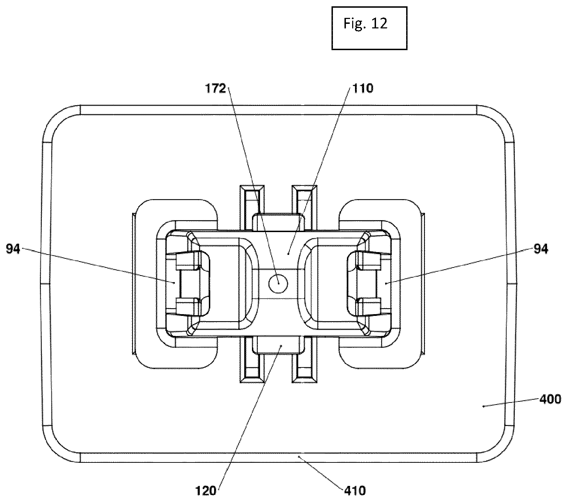

Figure 12 is a top view of a fastener clip 110 attached to a blade/rib 220, in accordance with some embodiments.

A fastener clip tub 110 is generally shaped like a tub that may be configured to engage and be secured to a slot 250 in a chassis 260. The tub 110 comprises at least two wings 120. The tub 110 has a top portion 70, 72 and a bottom portion 122, wherein the at least two wings 120 are attached to the tub 110 along a top portion of each of the wings 120 on opposite sides of the tub. The bottom portions of the wings 120 engage the chassis 260 to secure the tub 110 to the slot 250. The tub 110 comprises at least two hooks 94 on opposite sides of the tub 110 and located laterally to the wings 120 wherein the wings 120 are configured to bend in response to the tub 110 being inserted into a blade/rib 220, wherein the blade/rib 220 has tabs 230 with outside edges to engage the hooks 94. Each of the tabs 230 on the blade/rib 220 may be tapered 232 to form tapered tabs. At the end of each tab 230 a retention notch 270 engages the hook 94 on the tub 100.

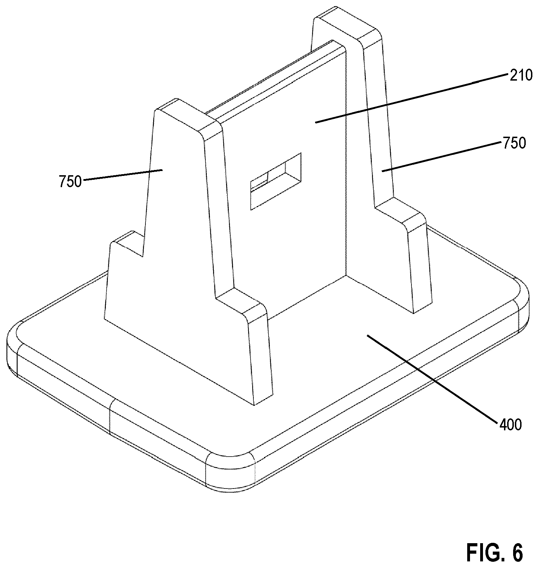

The blade/rib 220 has tabs 230 with outside edges to engage the hooks 94. The wings 120 are configured to move substantially independently from the sides, walls 111, 112 on tub 110. The wings 120 are configured to bend in response to the tub 110 being inserted into the slot 250 and to then bend back to original positions of the wings 120. In contrast conventional fasteners have the wings interfering or colliding with each other when engaging through a hole in the conventional blade 210 (Fig. 6). However, the hole in the conventional blade 210 limits the displacement of the wings when the wings collide together, and this displacement limits the retention force. Among other advantages the wing 120 is supported by the wall 101, 102 so in response to a particular wing spring force the wall 101, 102 may flex according to a desired stiffness and to provide an appropriate retention force. Thus, the spring constant of the wings 120 may be designed based on the width, length and thickness of the wings 120 and walls 111, 112 as is understood by one skilled in the art. Each of the tabs 230 on the blade/rib 220 may be ramped and/or tapered 232 from the top portion 240 to an end of the tabs 230 to form tapered 232 tabs 230. At the end of each tab 230 a retention notch 270 engages the hook 94 on the tub 110.

The secure engagement between the tub 110 and the blade/rib 220 may similarly be accomplished by exchanging the tab 230 and hook(s) 94 so that the tab 230 is in place of the hook 94 on tub 110 and the and the hook 94 is in place of the tab 230 on blade/rib 220. In other words, similar engagement may be achieved by designing the hook 94 and tab 230 functions to provide appropriate engagement between the tub 110 and blade 220. The blade/rib 220 would have a hook 94 with a taper 232 to allow the tab 230 on the inside of opening 80 of tub 110 to locate and guide the engagement of blade/rib 220 in fastener 110.

Among other advantages, the blade/rib 220 is strengthened compared to conventional ribs by among other things, "H" shaped rib ends or flanges 750 as can be seen in Fig. 8. The "H" shaped rib ends for example add a rib flange 750 that is perpendicular to the blade/rib 220 (and body panel 410) and thus adds strength to the blade/rib 220. The rib flange 750 forms an angle or a corner and thus the blade/rib 220 with a flange 750 is much stronger than a blade/rib 220 without a flange 750 or otherwise an unreinforced rib. Also, the rib flange 750 functions to locate the rib 220 as the rib 220 is inserted into the tub 110. For example, the rib flange 750 may be tapered 232 to more easily center and locate the rib 220 as the rib 220 is inserted into the opening 80 of the tub 110.

In some embodiments, fastener clip / tub 110 may be made of a suitable material for a desired engagement to a slot 250 in a chassis 260. In some embodiments, the fastener clip 100, tub 110, rib 220 and body panel 410 are manufactured by injection moldable plastic, acetal, nylon or may be made of an elastic/springy material such as metal.

In some embodiments, tub 110 includes a pair of legs 60, 62 joined at a head portion 70. The pair of legs 60, 62 form a clip opening 80 at an opposite end of the head portion 70 to allow entry of the blade 220 to which clip / tub 110 is configured to attach. In some embodiments, each of legs 60, 62 terminate at the end opposite to head portion 70 to feet 200. Among other advantages, the wings 120 are independent from the legs 60, 62 so upon insertion, the legs 60, 62 do not flex or spring as in conventional fasteners.

The head 70, 72 may have a raised center section 172 as shown in figures 8, 9, 11, 12. The raised center section 172 can sit or rest into a nest formed into an insertion tool to allow reliable fast insertion of the tub 110 onto the blade 220. So, a tier 1 supplier of the body panel 410 can pre-install the tub 110 and deliver the body panel assembly with the clip 110 ready for final assembly. The OEM manufacturer may thus simply take the pre-assembled body panel assembly 1100 as shown in Figure 11 with the clip 110 for final assembly by insertion into the slot 250 of the chassis 260.

In some embodiments, the tub 110 has opposite sides or walls 101, 102. The opposite sides 101, 102 of the tub 110 are connected by a bridge 74 at the top / head 70, 72. Sides 101, 102 may also include, on each leg 60, windows 90 and 92. Windows 90 and 92 facilitate injection molding such that the windows 90, 92 that may be configured to permit the molded material of walls 111, 112 to flow between the inside and the outside of walls/sides 111, 112. In some embodiments, molding the bridge 74 of side 102 between the inside and the outside of side 102 significantly strengthens the coupling between side 101 and side 102. Additionally, side 101 and side 102 may include protrusions, such as hook or protrusion 94, to further enhance the coupling between tub 110 and end wing tabs 230 on blade / rib 220.

The inside of head 70, 72 and bridge
74 also include at least one spring finger 76 as shown in Figs. 8, 9, 11 (two spring fingers 76 on opposite sides of head 70, 72, in one embodiment). As the tub 110 engages the rib 220 the spring finger 76 engages a top portion 240 of the rib 220 to maintain spring engagement. In some embodiments, spring finger(s) 76 are each attached to the inside of the bridge 74 on opposite sides of head 70, 72. Bridge 74 and spring finger(s) 76 can be designed to flex with a desired spring constant by designing the modulus of elasticity of the material, including selecting the width, the length and any other appropriate characteristics. Based at least on spring finger 76 being appropriately flexible and prongs having a suitable thickness at their ends and/or of softer hardness than the material of tub 110. Thus, the spring finger(s) 76 are configured to engage top portion 240 of blade 220 into and upon inserting the tub / fastener clip 110 over the blade 220. The spring finger 76 keeps a compressive force by pushing down on the top portion 240 thus keeping the hook 94 in constant engagement by keeping the force on tab 230. Thus, the spring finger(s) 76 keeps the hook 94 on tub 110 in tension and results in a force applied on tab 230 when inserted. Among other advantages, the spring finger(s) 76 compensates for gaps of different sizes and thus reduces or prevents disengagement between hook 94 and tab 230 and reduces or eliminates buzz, squeaks and rattles (BSR). According to one embodiment, two spring fingers 76 protrude downward from inside of the top or bridges 74 reduce or prevent rocking between the tub 110 and top portion 240 of rib 220.

In some embodiment, upon inserting the tub 110 over blade 220, the blade 220 is configured so spring finger(s) 76 spring back against the blade 220. During insertion, blade 220 slides upwards towards spring finger 76, which are also pushed apart by blade 220. According to one embodiment, upon inserting the tub / clip 110 over blade 220, spring finger 76 may be configured to dig into the material of blade 220 to further increase the removal effort required to separate the tub 110 from the blade 220. Furthermore, spring finger 76 may provide additional support for the coupling between the tub 110 and the blade 220. In addition, the inside of head portion 70 (not shown) is configured to engage blade 220 tightly to enhance the coupling between the tub 110, clip 100 and blade 220.

In some embodiments, the tub 110 and walls 111, 112 may be molded as one continuous piece. Among other advantages, the injection molding is performed producing a single continuous flow rather than separate flows that may be weaved inside and outside and through holes in walls 111, 112. For example, since there is no need for a window or hole in rib 220 to engage the tub 110, separate flows around the window as in conventional ribs does not occur since there is no window. This avoids weaving separate molding flows in such a manner that otherwise would create two or more material flows meeting causing a nit line. Also, by eliminating the hole in conventional fasteners the relatively loose connection and weak mold flows that may lead to BSR is reduced or eliminated. The different flows may have different pressure and temperatures and thus may not fuse fully when the flows meet. As such a nit line is the weakest point and likely a point of failure. Such a failure would represent the weak link in the chain in the coupling between the first 260 and second pieces 400. For example, by having the higher strength and elasticity of a single molding flow to form the tub 110, this continuous flow significantly enhances the strength of tub 110 making it suitable for high load and heavy-duty applications.

In some embodiments, each wing 120 may include a sloping portion 124 such that, while engaging slot 250, wing(s) 120 are configured to spring in and then spring back when tub 110 of clip 100 engages the slot 250. In some embodiments, each wing(s) 120 may include at least one depressed portion 122. The depressed portion 122 is formed and is configured to engage a portion of the slot 250 of surface 300. The feet 200 would thus sandwich the chassis 260 on one side 300 while the wing 120 and optional depressed portion 122 engage the other side of the chassis 260. In some embodiments, slot 250 may have any shape such as a circle, a square, a rectangle, a pentagon, a hexagon, a polygon, an n-sided polygon where n is a whole number, an ellipse, an oval, etc. Another advantage of feet 200 is in the event the tub 110 breaks, such as if the wing(s) 120 break and disengage the slot 250, then rather than the tub 110 falling into the chassis slot 250 the feet 200 prevent the tub 110 from falling into the slot 250. Otherwise, if the tub 110 falls into the slot 250 then retrieval of the tub 110 may be difficult especially if the chassis is a closed cavity.

In some embodiments, the depressed portion 122 may include, for example, an abrupt edge, a gradual angled edge, such as a curve, a single angled edge, a discrete multiangled edge or a pointed edge. The depressed portion 122 may be formed on the depressed part of each wing 120 so as to engage the slot 250 to increase an extraction force for the fastener clip 20 from the slot 250. The depressed portion 122 may be sized to suitably engage slot 250 of the surface 300 in order to obtain the desired level of extraction force. According to one embodiment, the depressed portion 122 may be a depression formed on wing 120. The size and shape of the depressed portion 122 may be formed in any suitable manner in order to permit relatively easy insertion of the fastener clip 100 into the slot 250 while increasing the extraction force.

In some embodiments, blade 220, rib 220 and flange 750 are configured to receive and attach to tub 110 of fastener clip 100. Blade 220, rib 220 and flange 750 may be either attached to or be part of surface 400 such as a body panel or trim piece. In embodiments where surface 400 is made of plastic, for example, the structure of blade 220, rib 220, flange 750, and top portion 240 may be molded as part of surface/structure 400. In some embodiments, surface/structure 400 may be an automobile and/or body panel that is to be attached to the automobile chassis 260 via tub 110.

In some embodiments, guiding structures are flanges 750, positioned on either side of blade 220, are configured to guide fastener clip 100 over blade 220 as the fastener clip is being inserted over the rib 220. In addition, guiding structures / flanges 750 are configured to provide additional stability to the coupling between blade 220 and tub 110, fastener clip 100 after installation.

The fastener clip assembly 100 is configured to join together two surfaces such as surfaces 300 and 400. Fastener clip 100, tub 110 is configured to fit over and attach to blade 220 that is attached to surface of body panel 410, and in addition fastener clip 100 is configured to removably attach to the slot in surface 200. During removal, the wings 120 spring inward to disengage the slot 250 of chassis 260 and as a result, the tub 110 stays on the blade 220 ready for reinsertion on the slot 250. For example, the fastener clip system 100, tub 110 may be used to removably fasten together a body panel 410 to the chassis 260 of an automobile. Among other advantages, the fastener clip 100 may be inserted and removed many times to meet the requirements of reinstallation over the life of the vehicle while maintaining a high extraction force to removal force ratio and providing solid engagement and low BSR.

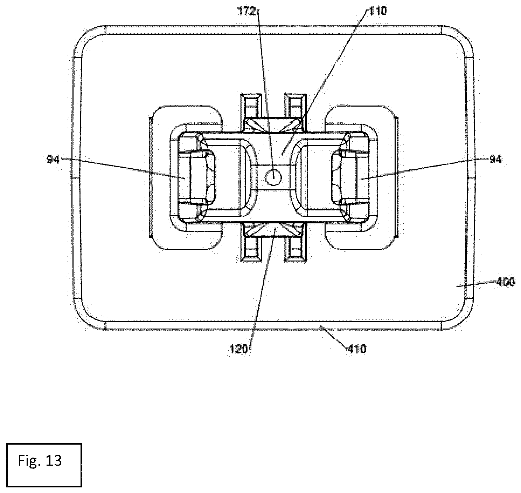

Figure 13 is a top view of a fastener clip, a tub attached to a blade, in accordance with another embodiment. Wing 120 have a generally triangular wing so that the top is narrower than at the end of the wing 120. For example, the thinner width at the top provides less friction during insertion in the slot 250 than the end of the wing 120. According to one embodiment walls 111, 112 flex or spring appropriately in order for wing(s) 120 to be inserted into slot 250.

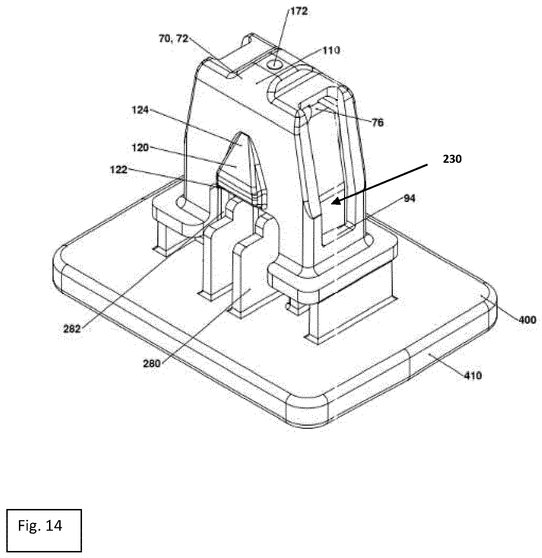

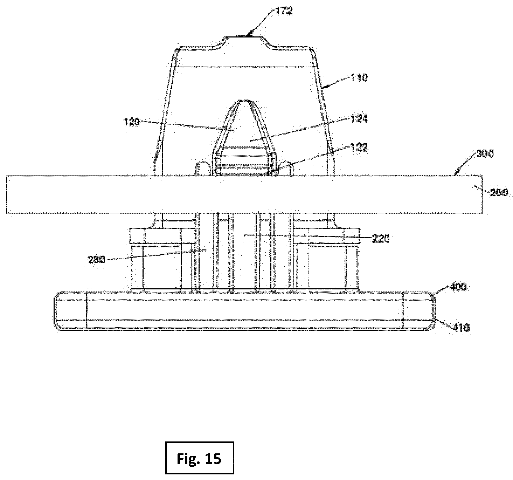

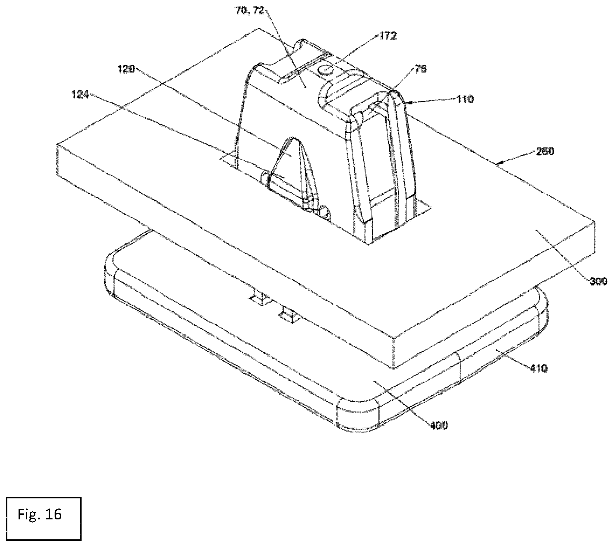

Figures 14-16 illustrate a fastener clip, a tub 110 attached to a blade 250, in accordance with another embodiment. According to another embodiment walls 111, 112 and/or wing(s) 120 flex or spring appropriately in order to be inserted into slot 250. The shape of wings 120 may be triangular, trapezoidal, rectangular, curved, oval, circular, square or any suitable shape. For example, the shape of wings 120 defines the level of resistance as the wings 120 slide past the slot 250 in order to provide the appropriate level of insertion and extraction resistance.

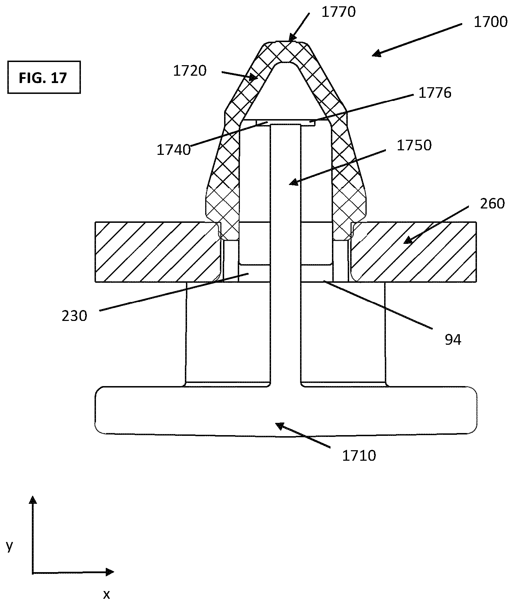

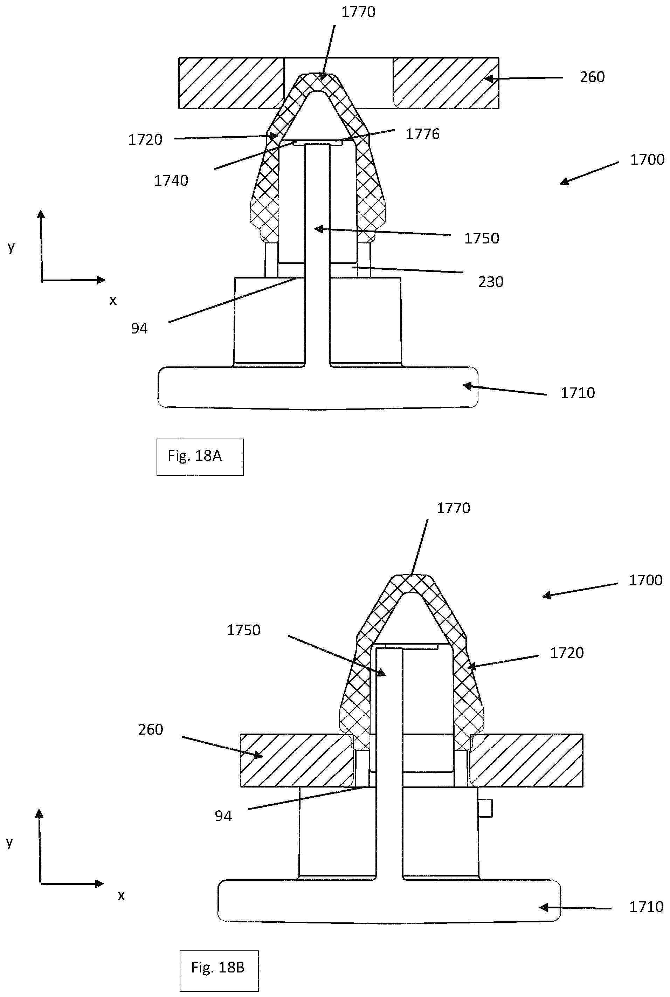

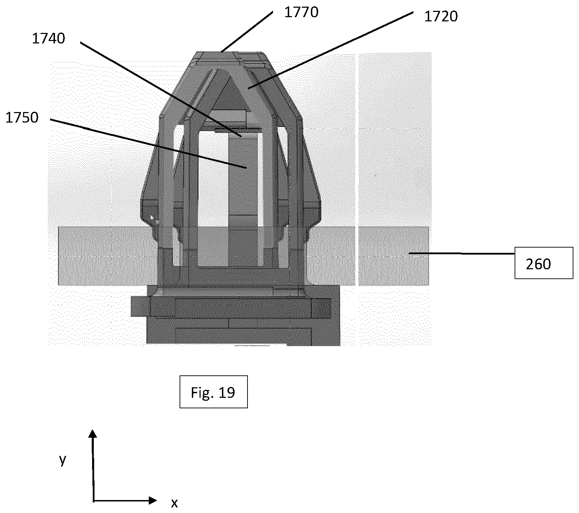

Figure 17- 19 illustrate fastener clip 1700, a tub 1720, a body panel 1710, a blade 1750 attached to a chassis 260, in accordance with another embodiment. According to this embodiment, the tub 1720 may move, translate, "float" or adjust according to the relative slot 250 position. For example, if the blade 1750 on the body panel 1710 does not line up into the middle of the slot 250, then the tub 1720 may slide or translate to line up with the slot 250 while the blade 1750 permits the tub 1720 to slide yet continue to engage each other. In this embodiment, the width of blade 1750 may be reduced or sized appropriately according to a desired tolerance or installation variance desired. The width of the blade 1750 is set according to the amount of translation desired. A relatively thin blade 1750 allows tub 1720 to slide a greater amount. The blade 1750 may thus be thin enough to provide the desired amount of translation while being strong enough to hold the body panel. For example, the thickness of blade 1750 may be 1.5 mm or any suitable thickness. As shown in Fig. 18 the tub 1720 may move in the negative x direction or translate while firmly retaining the body panel 1710 affixed to the chassis 260 in the y direction. As shown in Fig 18A, 18B, and 19 the tub 1720 may move to the right in the positive x direction or translate to the left in the negative x direction. For example, the blade 1750 may shift more than 1 mm, less than 1 mm off center with the slot
250 for a variance of about 2 mm, or more or any suitable amount. Among other advantages, the tub 1720 can adapt to or adjust to misalignment between the blade 1750 and the slot 250 and thus reducing the chance of the blade 1750 bending, twisting and thus breaking, reducing insertion effort and assembly time. The tub 1720 and blade 1750 may maintain contact without deformation while adjusting and adapting to the assembly tolerance between the blade 1750 and the center of the slot 250. If the tub 1720 could not float then the installer or operator would spend time trying to push and align the body panel and get the tub 1720 to snap into the slot 250. As such, the blade 1750 and or tub 1720 may bend, flex, deform, break, in order to align with slot 250 or partially install with poor alignment, gaps and fit or the installer may not be able to install the body panel.

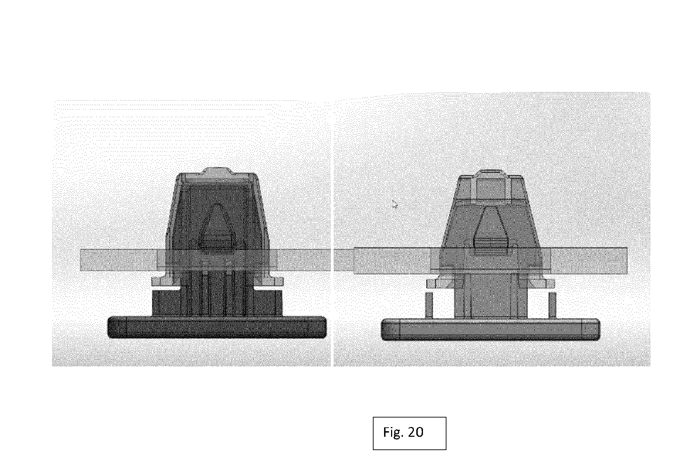

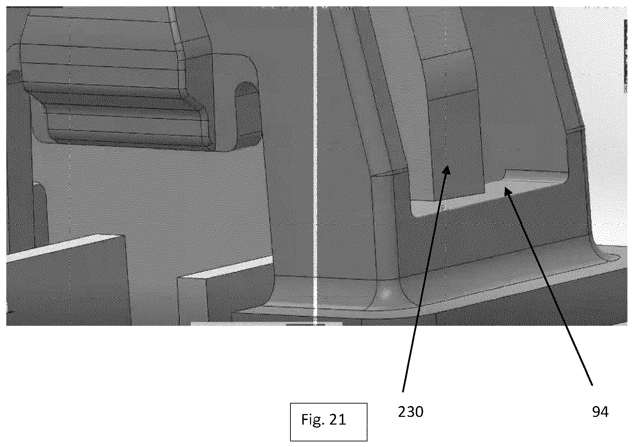

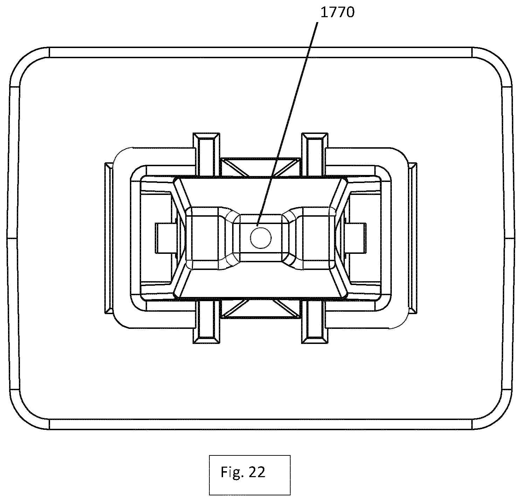

Figures 20, 21 and 22 show other views of the clip 1700, a tub 1720, a body panel 1710, a blade 1750 attached to a chassis 260 with a side-by-side comparison with the clip / tub 110. As can be seen from the inside of tub 1720 room in the top or head of but 1720 permits the blade 1750 to move in the positive and negative y direction and translate.

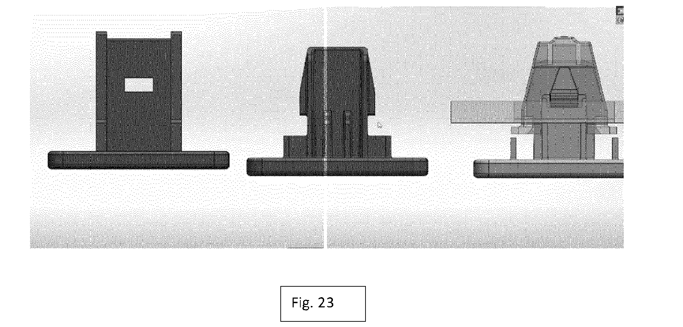

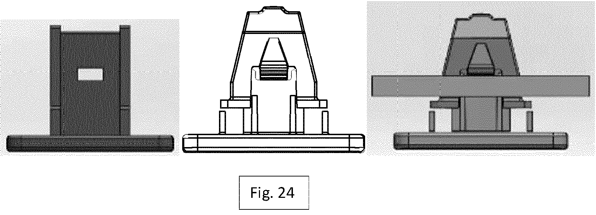

Figures 23 and 24 show side views of the tub 1720, the body panel 1710, and different embodiments of the blade 1750 attached to the chassis 260.

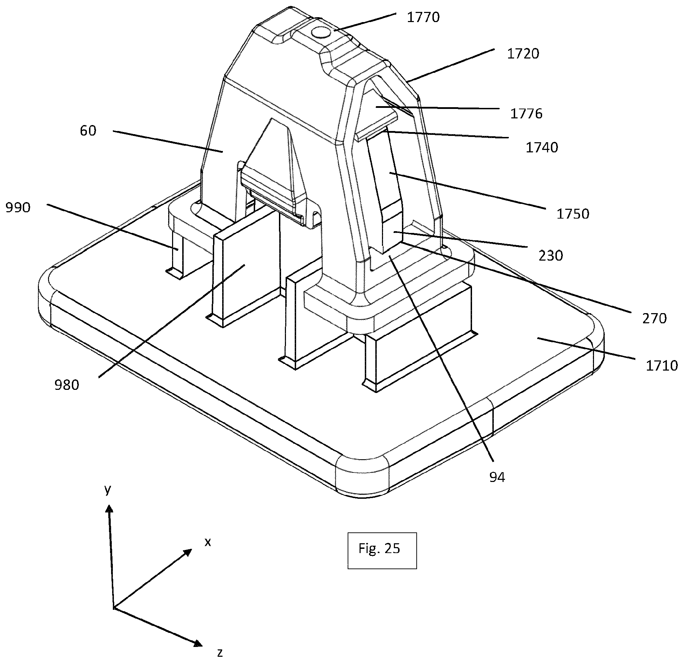

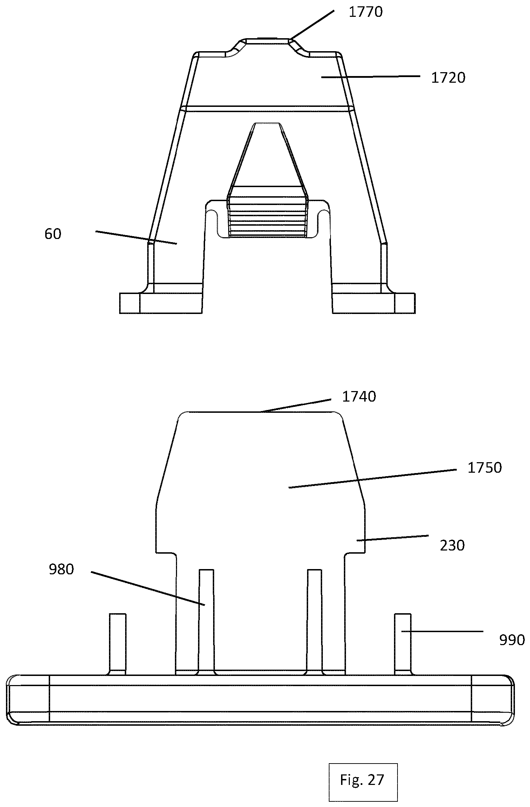

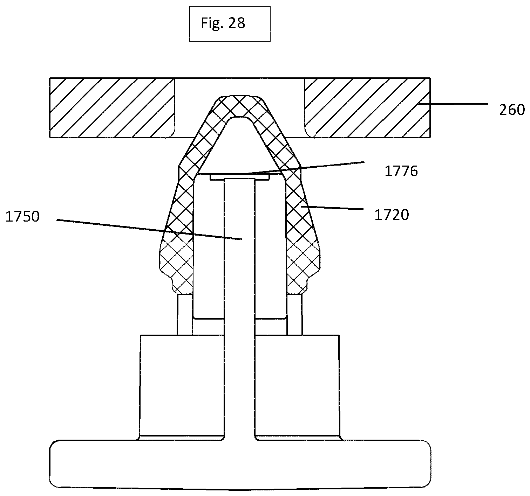

Figures 25 - 28 illustrate the tub 1720, the body panel 1710, and the blade 1750. As shown in Fig. 25, the tub 1720 comprises at least two hooks 94 on opposite sides of the tub 1720. The blade/rib 1750 has tabs 230 with outside edges to engage the hooks 94. At the end of each tab 230 a retention notch 270 engages the hook 94 on the tub 1720. The tab 230 and the retention notch 270 can slide along the hook 94 in the positive and negative x direction as previously described. Thus, the hook 94 also support or shoulder the tab 230 while permitting tab 230 to slide within the width of the hook 94.

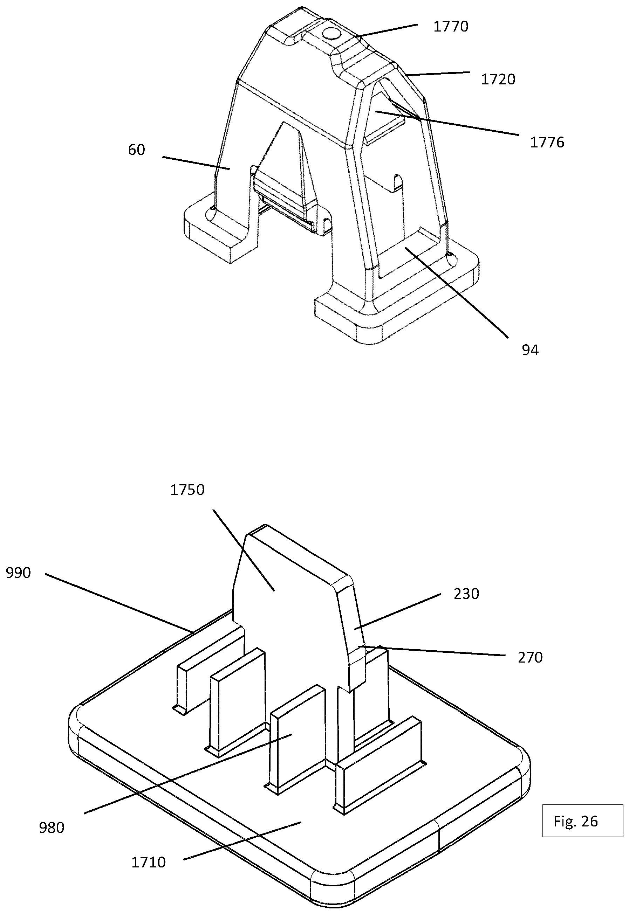

Figure 26 is the perspective view of the tub 1720, the body panel 1710, the blade 1750. Standoffs 980 on blade 1750 as shown in Fig. 26 provide support and rigidity to blade 1750. So if the blade 1750 is inserted other than into the center of slot 250 then as the tub 1720 translates, then the blade 1750 does not move, and does not rotate nor bend substantially such that the tub 1720 my translate in an unubstructed manner.

The inside of head 1770 also includes on the inside of tub 1720 at least one spring finger 1776 as shown in Figs. 17, 18A, 18B, 25, 26 and 28 (two spring fingers 1776 on opposite sides of head 1770, in one embodiment). As the tub 1720 engages the blade 1750, the spring finger 1776 engages a top portion 1740 of the blade 1750 to maintain spring engagement. As the tub 1720 slides or translates in response to the blade 1750 not being centered with the slot 250, the spring fingers 1776 engage and push down on the top portion 1740 of the blade 1750 while allowing the tub 1720 to slide relative to the blade 1750. Thus, the top portion 1740 may slide relative to the spring fingers 1776 a distance similar to, greater than or less than the distance traversed by the tab 230 to slide within the width of the hook 94. Since the spring fingers 1776 may be in constant tension with the top portion 1740, an appropriate amount frictional force while sufficiently permitting top portion 1740 to slide relative to the spring fingers 1776. The tension and resulting frictional force sufficiently engages tub 1720 with the blade 1750 to reduce or eliminate play and resulting rattle, buzzing or squeeking. The amount of movement in one axis may be limited in order to reduce rattle, buzzing or squeeking however the tradeoff is a limited ability to adapt to misalignment of the blade 1750 relative to the slot 250 center.

With reference to Figure 25, movement in the z direction is controlled by legs 60 engaging locating tab 990. Once tub 1720 is inserted onto blade 1750, legs 60 rest in between locating tabs 990 and stabilize the tub 1720 from moving in the z direction. 980 are standoffs that set the height of the tub on the body panel 1710 from the chassis.

It is understood that the implementation of other variations and modifications of the present invention in its various aspects will be apparent to those of ordinary skill in the art and that the invention is not limited by the specific embodiments described.

For example, in one embodiment, the fastener clip / tub 110, rib 220 and body panel 410 are manufactured by injection moldable plastic. In some embodiments, fastener clip 100, tub 110, body panel 410 and rib 220 may be made with a combination of metal and an injection moldable plastic. According to an alternative embodiment, the metal portion may be made first, using sheet metal made of steel and a stamping process, for example. For example, the plastic may be then injected around the metal. In some embodiments, the plastic may be injected both to the inside and to the outside of the metal clip as will be described further elsewhere.

One or more embodiments of the invention are described above. It should be noted that these and any other embodiments are exemplary and are intended to be illustrative of the invention rather than limiting. While the invention is widely applicable to various types of systems, a skilled person will recognize that it is impossible to include all of the possible embodiments and contexts of the invention in this disclosure. Upon reading this disclosure, many alternative embodiments of the present invention will be apparent to persons of ordinary skill in the art.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the principles and novel features disclosed herein.

The benefits and advantages that may be provided by the present invention have been described above with regard to specific embodiments. For example, the fastener clip 100 has the advantage of the tub 110 making contact with the blade 220 at fewer points thus reducing BSR (buzz, squeaking and rattling). These benefits and advantages, and any elements or limitations that may cause them to occur or to become more pronounced are not to be construed as critical, required, or essential features of any or all of the claims. As used herein, the terms "comprises," "comprising," or any other variations thereof, are intended to be interpreted as non-exclusively including the elements or limitations that follow those terms. Accordingly, a system, method, or other embodiment that comprises a set of elements is not limited to only those elements and may include other elements not expressly listed or inherent to the claimed embodiment.

## Claims

1. A fastener clip comprising:
a tub (110) configured to engage and be secured to a slot (250) in a chassis (260), comprising:
at least two wings (120) having a top portion (70, 72) and a bottom portion (122), wherein the at least two wings (120) are attached to the tub (110) along a top portion of each of the wings (120), on opposite sides of the tub (110), wherein the bottom portions of the wings (120) engage the chassis (260) to secure the tub (110) to the slot (250), and
at least two hooks (94) on opposite sides of the tub (110) located laterally to the wings (120) wherein the wings (120) are configured to bend in response to a rib (220) being inserted into the tub (110), wherein the rib (220) has tabs (230) with outside edges to engage the hooks (94), wherein the opposite sides of the tub (110) are connected by a bridge (74), the bridge further comprising at least one spring finger (76), whereas the tub (110) engages the rib (220), the spring finger engaging a top portion of the rib (220) to maintain spring engagement.

2. The fastener clip of claim 1, wherein each of the tabs (230) on the rib (220) is tapered to form tapered tabs, and at the end of each tab a retention notch (270) engages the hook (94) on the tub (110).

3. The fastener clip of claim 2, wherein as the tub is inserted into the rib the hooks on the tub slide along the tabs and snap on each side to engage the retention notch (270) on the rib (220).

4. The fastener clip of claim 1, wherein the tub (110) further comprises a pair of feet (200) correspondingly coupled to a pair of legs (60, 62) at the ends of a pair of legs opposite the top portion (70, 72).

5. The fastener clip of claim 1, wherein the fastener clip is configured to couple the chassis (260) to a panel (410) based at least upon the fastener being configured to be secured to the rib (220) and to the slot (250) in the chassis (260).

6. The fastener clip of claim 1, wherein the rib (220) comprises one or more flanges (750) that are configured to add rigidity to the rib (220), and wherein the flanges (750) are configured to guide the clip onto the rib (220).

7. The fastener clip of claim 1, wherein the wings (120) are configured to move substantially independently from sides of the tub (110).

8. The fastener clip of claim 1, wherein the wings (120) are at least one of: triangular, trapezoidal, rectangular, square, circular, semi- circular, curved and are configured to bend in response to the tub (110) being inserted into the slot (250) and to then bend back to original positions of the wings (120).

9. A fastener assembly system (100) comprising:
a chassis (260) comprising a slot (250);
a panel (410) comprising a rib (220);
a fastener clip comprising:
a tub (110) configured to engage and be secured to the slot (250) in the chassis (260), wherein the tub (110) is configured to be secured to the slot (250) based at least on the tub (110) comprising:
at least two wings (120) attached to the tub (110) along a top portion (70, 72) of each of the wings (120) on opposite sides of the tub (110), wherein bottom portions of the wings (120) engage the chassis (410) to secure the tub (110) to the slot (250), and
at least two hooks (94) on opposite sides of the tub (110) located laterally to the wings (120), wherein wings (120) are configured to bend in response to the rib (220) being inserted into the tub (110), wherein the rib (220) has tabs (230) with outside edges to engage the hooks (94);
wherein the rib (220) on the panel (410) engages the fastener panel to engage the slot (250) in the chassis (260) and to secure the fastener clip to the chassis (260);
wherein the opposite sides of the tub (110) are connected by a bridge (74), the bridge further comprising at least one spring finger (76), whereas the tub (110) engages the rib (220) the spring finger engaging a top portion of the rib (220) to maintain spring engagement.

10. The fastener assembly system (100) of claim 9, wherein each of the tabs (230) on the rib (220) is tapered to form tapered tabs, and at the end of each tab a retention notch (270) engages the hook (94) on the tub (110).

11. The fastener assembly system (100) of claim 9, wherein as the rib (220) is inserted into the tub (110) the hooks (94) on the tub slide along the tabs (230) and snap on each side to engage the retention notch (270) on the rib.

12. The fastener assembly system of claim 9, wherein the fastener clip is configured to couple the chassis (260) to the panel (410) based at least on the fastener being configured to be secured to the rib (220) and to the slot (250) in the chassis (260).

13. The fastener assembly system (100) of claim 9, wherein the wings (120) are at least one of: triangular, trapezoidal, rectangular, square, circular, semi-circular, curved and are configured to move substantially independently from sides of the tub (110).

14. The fastener assembly system (100) of claim 9, wherein the wings (120) are configured to bend in response to the tub (110) being inserted into the slot (250) and to then bend back to original positions of the wings (120).

## Patentansprüche

1. Befestigungsklammer, umfassend:
eine Schale (110), die konfiguriert ist, um einen Schlitz (250) in einem Rahmen (260) einzugreifen und daran befestigt zu werden, umfassend:
mindestens zwei Flügel (120), die einen oberen Abschnitt (70, 72) und einen unteren Abschnitt (122) aufweisen, wobei die mindestens zwei Flügel (120) entlang eines oberen Abschnitts von jedem der Flügel (120) an gegenüberliegenden Seiten der Schale (110) an der Schale (110) befestigt sind, wobei die unteren Abschnitte der Flügel (120) den Rahmen (260) eingreifen, um die Schale (110) an dem Schlitz (250) zu befestigen, und
mindestens zwei Haken (94) an gegenüberliegenden Seiten der Schale (110), die seitlich zu den Flügeln (120) angeordnet sind, wobei die Flügel (120) konfiguriert sind, um als Reaktion darauf zu biegen, dass eine Rippe (220) in die Schale (110) eingeführt wird, wobei die Rippe (220) Laschen (230) mit Außenkanten zum Eingreifen der Haken (94) aufweist, wobei die gegenüberliegenden Seiten der Schale (110) durch eine Brücke (74) verbunden sind, die Brücke ferner mindestens umfassend einen Federfinger (76), während die Schale (110) die Rippe (220) eingreift, wobei der Federfinger den oberen Abschnitt der Rippe (220) eingreift, um einen federnden Eingriff aufrechtzuerhalten.

2. Befestigungsklammer nach Anspruch 1, wobei jede der Laschen (230) an der Rippe (220) verjüngt ist, um verjüngte Laschen zu bilden, und an dem Ende jeder Lasche eine Haltekerbe (270) den Haken (94) an der Schale (110) eingreift.

3. Befestigungsklammer nach Anspruch 2, wobei, wenn die Schale in die Rippe eingeführt wird, die Haken an der Schale entlang der Laschen gleiten und auf jeder Seite einrasten, um die Haltekerbe (270) an der Rippe (220) einzugreifen.

4. Befestigungsklammer nach Anspruch 1, wobei die Schale (110) ferner ein Paar Füße (200) umfasst, die entsprechend mit einem Paar Schenkeln (60, 62) an den Enden eines Paars von Schenkeln gegenüber dem oberen Abschnitt (70, 72) gekoppelt sind.

5. Befestigungsklammer nach Anspruch 1, wobei die Befestigungsklammer konfiguriert ist, um den Rahmen (260) mit einer Platte (410) zu koppeln, zumindest darauf basierend, dass das Befestigungselement konfiguriert ist, um an der Rippe (220) und an dem Schlitz (250) in dem Rahmen (260) befestigt zu werden.

6. Befestigungsklammer nach Anspruch 1, wobei die Rippe (220) einen oder mehrere Flansche (750) umfasst, die konfiguriert sind, um der Rippe (220) Steifigkeit zu verleihen, und wobei die Flansche (750) konfiguriert sind, um die Klammer auf die Rippe (220) zu führen.

7. Befestigungsklammer nach Anspruch 1, wobei die Flügel (120) konfiguriert sind, um sich im Wesentlichen unabhängig von Seiten der Schale (110) zu bewegen.

8. Befestigungsklammer nach Anspruch 1, wobei die Flügel (120) mindestens eines von Folgenden sind: dreieckig, trapezförmig, rechteckig, quadratisch, kreisförmig, halbkreisförmig, gekrümmt und konfiguriert sind, um sich als Reaktion darauf zu biegen, dass die Schale (110) in den Schlitz (250) eingeführt wird, und sich dann in ursprüngliche Positionen der Flügel (120) zurückzubiegen.

9. Befestigungsanordnungssystem (100), umfassend:
einen Rahmen (260), umfassend einen Schlitz (250);
eine Platte (410), umfassend eine Rippe (220);
eine Befestigungsklammer, umfassend:
eine Schale (110), die konfiguriert ist, um den Schlitz (250) in dem Rahmen (260) einzugreifen und daran befestigt zu werden, wobei die Schale (110) konfiguriert ist, um an dem Schlitz (250) befestigt zu werden, zumindest darauf basierend, dass die Schale (110) Folgendes umfasst:
mindestens zwei Flügel (120), die entlang eines oberen Abschnitts (70, 72) von jedem der Flügel (120) an gegenüberliegenden Seiten der Schale (110) an der Schale (110) befestigt sind, wobei untere Abschnitte der Flügel (120) den Rahmen (410) eingreifen, um die Schale (110) an dem Schlitz (250) zu befestigen, und mindestens zwei Haken (94) an gegenüberliegenden Seiten der Schale (110), die seitlich zu den Flügeln (120) angeordnet sind, wobei die Flügel (120) konfiguriert sind, um sich als Reaktion darauf zu biegen, dass die Rippe (220) in die Schale (110) eingeführt wird, wobei die Rippe (220) Laschen (230) mit Außenkanten zum Eingreifen der Haken (94) aufweist;
wobei die Rippe (220) an der Platte (410) die Befestigungsplatte eingreift, um den Schlitz (250) in dem Rahmen (260) einzugreifen und die Befestigungsklammer an dem Rahmen (260) zu befestigen;
wobei die gegenüberliegenden Seiten der Schale (110) durch eine Brücke (74) verbunden sind, wobei die Brücke ferner mindestens einen Federfinger (76) umfasst, während die Schale (110) die Rippe (220) eingreift, wobei der Federfinger einen oberen Abschnitt der Rippe (220) eingreift, um einen federnden Eingriff aufrechtzuerhalten.

10. Befestigungsanordnungssystem (100) nach Anspruch 9, wobei jede der Laschen (230) an der Rippe (220) verjüngt ist, um verjüngte Laschen zu bilden, und an dem Ende jeder Lasche eine Haltekerbe (270) den Haken (94) an der Schale (110) eingreift.

11. Befestigungsanordnungssystem (100) nach Anspruch 9, wobei, wenn die Rippe (220) in die Schale (110) eingeführt wird, die Haken (94) an der Schale entlang der Laschen (230) gleiten und auf jeder Seite einrasten, um die Haltekerbe (270) an der Rippe einzugreifen.

12. Befestigungsanordnungssystem nach Anspruch 9, wobei die Befestigungsklammer konfiguriert ist, um den Rahmen (260) mit der Platte (410) zu koppeln, zumindest darauf basierend, dass das Befestigungselement konfiguriert ist, um an der Rippe (220) und an dem Schlitz (250) in dem Rahmen (260) befestigt zu werden.

13. Befestigungsanordnungssystem (100) nach Anspruch 9, wobei die Flügel (120) mindestens eines von Folgenden sind: dreieckig, trapezförmig, rechteckig, quadratisch, kreisförmig, halbkreisförmig, gekrümmt und konfiguriert sind, um sich im Wesentlichen unabhängig von Seiten der Schale (110) zu bewegen.

14. Befestigungsanordnungssystem (100) nach Anspruch 9, wobei die Flügel (120) konfiguriert sind, um sich als Reaktion darauf zu biegen, dass die Schale (110) in den Schlitz (250) eingeführt wird, und sich dann in ursprüngliche Positionen der Flügel (120) zurückzubiegen.

## Revendications

1. Attache de fixation comprenant :
une cuvette (110) configurée pour venir en prise avec une fente (250) dans un châssis (260) et y être fixée, comprenant: au moins deux ailes (120) ayant une partie supérieure (70, 72) et une partie inférieure (122), dans laquelle les au moins deux ailes (120) sont fixées à la cuvette (110) le long d'une partie supérieure de chacune des ailes (120), sur les côtés opposés de la cuvette (110), dans laquelle les parties inférieures des ailes (120) viennent en prise avec le châssis (260) pour fixer la cuvette (110) à la fente (250), et au moins deux crochets (94) sur les côtés opposés de la cuvette (110), disposés latéralement par rapport aux ailes (120), dans laquelle les ailes (120) sont configurées pour se courber en réponse à l'insertion d'une nervure (220) dans la cuvette (110), dans laquelle la nervure (220) comporte des languettes (230) ayant des bords extérieurs destinés à venir en prise avec les crochets (94), dans laquelle les côtés opposés de la cuvette (110) sont raccordés par un pont (74), le pont comprenant en outre au moins un doigt à ressort (76), tandis que la cuvette (110) vient en prise avec la nervure (220), le doigt à ressort venant en prise avec une partie supérieure de la nervure (220) pour maintenir une mise en prise élastique.

2. Attache de fixation selon la revendication 1, dans laquelle chacune des languettes (230) sur la nervure (220) est progressivement rétrécie de manière à former des languettes progressivement rétrécies, et à l'extrémité de chaque languette, une encoche de retenue (270) vient en prise avec le crochet (94) sur la cuvette (110).

3. Attache de fixation selon la revendication 2, dans laquelle, lorsque la cuvette est insérée dans la nervure, les crochets sur la cuvette coulissent le long des languettes et s'enclenchent de chaque côté pour venir en prise avec l'encoche de retenue (270) sur la nervure (220).

4. Attache de fixation selon la revendication 1, dans laquelle la cuvette (110) comprend en outre une paire de pieds (200) couplée de manière correspondante à une paire de jambes (60, 62) aux extrémités d'une paire de jambes opposée à la partie supérieure (70, 72).

5. Attache de fixation selon la revendication 1, dans laquelle l'attache de fixation est configurée pour coupler le châssis (260) à un panneau (410) au moins sur la base que l'attache de fixation est configurée pour être fixée à la nervure (220) et à la fente (250) dans le châssis (260).

6. Attache de fixation selon la revendication 1, dans laquelle la nervure (220) comprend une ou plusieurs brides (750) qui sont configurées pour ajouter de la rigidité à la nervure (220), et dans laquelle les brides (750) sont configurées pour guider l'attache sur la nervure (220).

7. Attache de fixation selon la revendication 1, dans laquelle les ailes (120) sont configurées pour se déplacer sensiblement indépendamment des côtés de la cuvette (110).

8. Attache de fixation selon la revendication 1, dans laquelle les ailes (120) sont au moins l'une parmi : triangulaires, trapézoïdales, rectangulaires, carrées, circulaires, semi-circulaires, courbées et sont configurées pour se courber en réponse à l'insertion de la cuvette (110) dans la fente (250) et ensuite pour revenir en se courbant aux positions d'origine des ailes (120).

9. Système d'ensemble de fixation (100) comprenant :
un châssis (260) comprenant une fente (250) ;
un panneau (410) comprenant une nervure (220) ;
une attache de fixation comprenant :
une cuvette (110) configurée pour venir en prise avec la fente (250) dans le châssis (260) et y être fixée, dans lequel la cuvette (110) est configurée pour être fixée à la fente (250) au moins sur la base que la cuvette (110) comprend :
au moins deux ailes (120) fixées à la cuvette (110) le long d'une partie supérieure (70, 72) de chacune des ailes (120) sur les côtés opposés de la cuvette (110), dans lequel les parties inférieures des ailes (120) viennent en prise avec le châssis (410) pour fixer la cuvette (110) à la fente (250), et au moins deux crochets (94) sur des côtés opposés de la cuvette (110), disposés latéralement par rapport aux ailes (120), dans lequel les ailes (120) sont configurées pour se courber en réponse à l'insertion de la nervure (220) dans la cuvette (110), dans lequel la nervure (220) comporte des languettes (230) ayant des bords extérieurs destinés à venir en prise avec les crochets (94) ;
dans lequel la nervure (220) sur le panneau (410) vient en prise avec le panneau de fixation pour venir en prise avec la fente (250) dans le châssis (260) et pour fixer l'attache de fixation au châssis (260) ;
dans lequel les côtés opposés de la cuvette (110) sont raccordés par un pont (74), le pont comprenant en outre au moins un doigt à ressort (76), tandis que la cuvette (110) vient en prise avec la nervure (220), le doigt à ressort venant en prise avec une partie supérieure de la nervure (220) pour maintenir une mise en prise élastique.

10. Système d'ensemble de fixation (100) selon la revendication 9, dans lequel chacune des languettes (230) sur la nervure (220) est progressivement rétrécie de manière à former des languettes progressivement rétrécies, et à l'extrémité de chaque languette, une encoche de retenue (270) vient en prise avec le crochet (94) sur la cuvette (110).

11. Système d'ensemble de fixation (100) selon la revendication 9, dans lequel, lorsque la nervure (220) est insérée dans la cuvette (110), les crochets (94) sur la cuvette coulissent le long des languettes (230) et s'enclenchent de chaque côté pour venir en prise avec l'encoche de retenue (270) sur la nervure.

12. Système d'ensemble de fixation selon la revendication 9, dans lequel l'attache de fixation est configurée pour coupler le châssis (260) au panneau (410) au moins sur la base que l'attache de fixation est configurée pour être fixée à la nervure (220) et à la fente (250) dans le châssis (260).

13. Système d'ensemble de fixation (100) selon la revendication 9, dans lequel les ailes (120) sont au moins l'une parmi : triangulaires, trapézoïdales, rectangulaires, carrées, circulaires, semi-circulaires, courbées et sont configurées pour se déplacer sensiblement indépendamment des côtés de la cuvette (110).

14. Système d'ensemble de fixation (100) selon la revendication 9, dans lequel les ailes (120) sont configurées pour se courber en réponse à l'insertion de la cuvette (110) dans la fente (250) et ensuite pour revenir en se courbant aux positions d'origine des ailes (120).
